# EUROPÄISCHE PATENTSCHRIFT

(11) **EP 2 951 416 B1**
(45) Veröffentlichungstag und Bekanntmachung des Hinweises auf die Patenterteilung: **23.10.2019**
(21) Anmeldenummer: 13821796.3
(22) Anmeldetag: 19.12.2013
(51) Int. Cl.: F02B 77/04, F02B 29/04

(54) **VERFAHREN ZUM REINIGEN EINES BRENNRAUMS EINER BRENNKRAFTMASCHINE UND BRENNKRAFTMASCHINE**
METHOD FOR CLEANING A COMBUSTION CHAMBER OF AN INTERNAL COMBUSTION ENGINE, AND INTERNAL COMBUSTION ENGINE
PROCÉDÉ DE NETTOYAGE D'UNE CHAMBRE DE COMBUSTION D'UN MOTEUR À COMBUSTION INTERNE ET MOTEUR À COMBUSTION INTERNE

(30) Priorität: 30.01.2013 DE 102013201532
(43) Veröffentlichungstag der Anmeldung: 09.12.2015
(73) Patentinhaber: MTU Friedrichshafen GmbH, 88045 Friedrichshafen (DE)
(72) Erfinder: STILLER, Bernhard, 88281 Schlier (DE)
(74) Vertreter: Kordel, Mattias
(86) Internationale Anmeldenummer: PCT/EP2013/003868
(87) Internationale Veröffentlichungsnummer: WO 2014/117799

(56) Entgegenhaltungen:
- EP-A1- 2 039 907
- EP-A2- 1 387 066
- DE-A1- 19 945 813
- DE-A1-102007 018 050
- JP-A- 2008 133 737
- JP-U- S61 159 630

## Beschreibung

Die Erfindung betrifft ein Verfahren zum Reinigen eines Brennraums einer Brennkraftmaschine gemäß Anspruch 1 sowie eine Brennkraftmaschine gemäß Oberbegriff des Anspruchs 9.

Bei Brennkraftmaschinen besteht typischerweise das Problem, dass sich in der Folge von fortlaufend in mindestens einem Brennraum ablaufenden Verbrennungsreaktionen mit der Zeit Ablagerungen in dem Brennraum bilden, die beispielsweise Ölasche und/oder mit Verbrennungsluft zugeführte Verunreinigungen umfassen. Insbesondere bei Brennkraftmaschinen, die als Gasmotoren ausgebildet sind, können solche Ablagerungen zu Klopfen führen, was wiederum eine Verringerung einer Maximalleistung und Lebensdauer der Brennkraftmaschine nach sich zieht. Es ist daher nötig, solche Brennkraftmaschinen in vorherbestimmten Intervallen oder auch bedarfsabhängig zu reinigen beziehungsweise die Brennräume von Ablagerungen zu befreien. Hierzu ist typischerweise vorgesehen, die Brennkraftmaschine abzustellen, zu zerlegen, und die Ablagerungen in den Brennräumen mechanisch zu beseitigen. Dies ist äußerst aufwändig, insbesondere zeit- und kostenintensiv, und bedeutet, dass die Brennkraftmaschine für die Zeit der Reinigung still gelegt werden muss, was wiederum Ausfallkosten nach sich zieht. Aus der britischen Patentanmeldung GB 2 357 318 A geht ein Verfahren hervor, mittels dem bereits die Bildung von Ablagerungen in dem Brennraum einer Brennkraftmaschine vermieden werden soll. Hierzu wird Wasser in den Brennraum eingebracht, insbesondere eingespritzt, welches dort verdampft. Dabei setzt es insbesondere die Verbrennungstemperatur herab, wobei die Bildung von Siliziumoxiden vermieden wird, welche sonst zu Ablagerungen in dem Brennraum führen. Nachteilig an dieser Vorgehensweise ist, dass es einer komplexen Einspritzvorrichtung zur Einbringung des Wassers bedarf.

JP S61-159630 offenbart ein ähnliches Verfahren.

EP1387066, EP2039907 und DE102007018050 offenbaren eine Brennkraftmaschine mit im AGR-Kühler kondensierendem Wasser.

Der Erfindung liegt die Aufgabe zugrunde, ein Verfahren und eine Brennkraftmaschine zu schaffen, die insbesondere eine einfache und kostengünstige Reinigung des mindestens einen Brennraums der Brennkraftmaschine von Ablagerungen ermöglichen.

Die Aufgabe wird gelöst, indem ein Verfahren mit den Schritten des Anspruchs 1 geschaffen wird. Dabei wird ein gasförmiger Stoff in eine Kühleinrichtung eingeleitet. Der gasförmige Stoff weist zumindest stromaufwärts der Kühleinrichtung eine relative Feuchte von mehr als 0% auf, er umfasst also Wasserdampf mit einer gewissen, von Null verschiedenen Konzentration, In der Kühleinrichtung wird der Stoff unter einen Taupunkt gekühlt. Hierdurch wird ein Niederschlag von Wasser gebildet. Der den Niederschlag umfassende Stoff wird in einen Brennraum der Brennkraftmaschine eingeleitet, und es wird eine Verbrennungsreaktion in dem Brennraum durchgeführt. Durch den Anstieg von Druck und Temperatur während der Verbrennungsreaktion verdampft das von dem Niederschlag umfasste Wasser, wobei sich mit dem Phasenübergang insbesondere eine schlagartige Volumenänderung ergibt. Hierdurch platzen die Beläge beziehungsweise Ablagerungen von einer Brennraumwandung ab. Anschließend werden Rückstände aus dem Brennraum ausgeleitet. Dabei umfasst der Begriff "Rückstände" einerseits bei der Verbrennungsreaktion entstehende Abgase, andererseits aber auch die abgeplatzten Beläge, die den Brennraum insbesondere gemeinsam mit den Abgasen durch ein Auslassventil verlassen körinen. Der Brennraum wird so sehr effektiv gereinigt. Das Verfahren ist kostengünstig, weil es keiner komplizierten Vorrichtung zur Einbringung von Wasser bedarf. Vielmehr wird bevorzugt die ohnehin vorhandene Feuchte des gasförmigen Stoffes genutzt, um in einer typischerweise ohnehin vorgesehenen Kühleinrichtung einen Niederschlag zu bilden, der anschließend der Reinigung des mindestens einen Brennraums dient. Im Rahmen des Verfahrens ist es auch nicht nötig, die Brennkraftmaschine zu zerlegen und mechanisch zu reinigen. Vielmehr kann die Reinigung während des Betriebs der Brennkraftmaschine und insbesondere bei voller Leistung erfolgen. Aufgrund der Effizienz des Reinigungsverfahrens steht die Maximalleistung über einen längeren Betriebszeitraum zur Verfügung, und die bauteilschädigende Wirkung von Klopfen kann auf ein Minimum reduziert werden.

Es ist möglich, dass das Verfahren zusätzlich dazu führt, dass aufgrund in dem Brennraum verdampfenden Wassers geringere Verbrennungstemperaturen herrschen, was sich positiv auf die Emissionen der Brennkraftmaschine auswirkt. Ebenfalls ist es bevorzugt möglich, dass im Brennraum verdampfendes Wasser dazu führt, dass sich keine oder nur in geringerem Ausmaß Siliziumoxide bilden, so dass eine Ausbildung neuer Ablagerungen verhindert oder zumindest verzögert wird.

Im Rahmen des Verfahrens ist es möglich, dass der Niederschlag in der Kühleinrichtung ausfällt. Alternativ oder zusätzlich ist es möglich, dass der Niederschlag in einer Zuleitung ausfällt, über die der gasförmige Stoff von der Kühleinrichtung zu dem mindestens einen Brennraum geleitet wird. Vorzugsweise wird in der Kühleinrichtung und/oder in der Zuleitung ein Nebel aus Wassertröpfchen in einem gasförmigen Reststoff gebildet.

Im Rahmen des Verfahrens wird vorzugsweise eine Temperatur in der Kühlreinrichtung gezielt so gewählt, dass die relative Feuchte des gasförmigen Stoffes in der Kühleinrichtung und/oder stromabwärts der Kühleinrichtung auf einen Wert über 100% steigt. Dies ist eine Vorgehensweise, die typischerweise bei bekannten Brennkraftmaschinen und Verfahren zu deren Betrieb bewusst vermieden wird. Im Gegenteil wird die Temperatur in gängigen Kühleinrichtungen typischerweise stets so gewählt, dass gerade kein Niederschlag in der Kühleinrichtung oder stromabwärts derselben ausfällt. Beispielsweise wird bei Brennkraftmaschinen, die in tropischen Gegenden mit relativ hoher Luftfeuchtigkeit betrieben werden, eine Temperatur in einer entsprechenden Kühleinrichtung höher gewählt als bei Brennkraftmaschinen, die in Gegenden mit vergleichsweise niedriger Luftfeuchtigkeit betrieben werden. Im Rahmen des Verfahrens wird dagegen die Möglichkeit, von dem gasförmigen Stoff umfasste Feuchtigkeit in oder stromabwärts der Kühleinrichtung durch gezielte Einstellung von deren Temperatur ausfallen zu lassen, bewusst genutzt, um den mindestens einen Brennraum der Brennkraftmaschine zu reinigen.

Es wird ein Verfahren bevorzugt, dass sich dadurch auszeichnet, dass als gasförmiger Stoff ein Gasgemisch aus Verbrennungsluft und einem Brennstoff verwendet wird. Hierbei wird als Kühleinrichtung vorzugsweise ein Gemischkühler verwendet, der bevorzugt stromabwärts eines Gasmischers angeordnet ist, in dem Verbrennungsluft mit dem Brennstoff, vorzugsweise einem Gas, gemischt wird. In diesem Zusammenhang wird insbesondere eine Brennkraftmaschine bevorzugt, die nach dem Ottoprinzip arbeitet. Im Rahmen des Verfahrens wird hier die Restfeuchte der Verbrennungsluft und gegebenenfalls auch die Restfeuchte des Brennstoffs genutzt, um mittels des Gemischkühlers ein Niederschlag zu erzeugen, der anschließend zur Reinigung des Brennraums dient.

Es wird auch ein Verfahren bevorzugt, dass sich dadurch auszeichnet, dass als gasförmiger Stoff Verbrennungsluft verwendet wird. In diesem Fall wird als Kühleinrichtung vorzugsweise ein Verbrennungsluftkühler verwendet. Diese Ausführungsform des Verfahrens wird besonders bevorzugt in Zusammenhang mit einer Brennkraftmaschine durchgeführt, die nach dem Dieselprinzip arbeitet und/oder bei der ein Brennstoff unmittelbar in den Brennraum eingebracht wird, ohne dass er zuvor, mit der Verbrennungsluft vermischt wird. Bei dieser Ausführungsform des Verfahrens wird die relative Feuchte der Verbrennungsluft genutzt, und in dem Verbrennungsluftkühler oder stromabwärts desselben wird ein Niederschlag erzeugt, der anschließend zur Reinigung des Brennraums herangezogen wird.

Es wird auch ein Verfahren bevorzugt, dass sich dadurch auszeichnet, das als gasförmiger Stoff rückgeführtes Abgas der Brennkraftmaschine verwendet wird. Die Brennkraftmaschine weist in diesem Fall vorzugsweise eine Abgasrückführung auf, über die dem mindestens einen Brennraum zusammen mit der Verbrennungsluft Abgas zugeführt wird, insbesondere um Emissionen der Brennkraftmaschine zu senken oder den Wirkungsgrad derselben zu erhöhen. Als Kühleinrichtung wird bei dieser Ausführungsform des Verfahrens vorzugsweise ein Abgasrückführ-Kühler verwendet. Alternativ oder zusätzlich ist es möglich, dass als Kühleinrichtung ein Verbrennungsluftkühler verwendet wird, in welchem das rückgeführte Abgas gemeinsam mit der Verbrennungsluft gekühlt wird. Es ist also möglich, die relative Feuchte von rückgeführtem Abgas zu nutzen, um in oder stromabwärts von einem Abgasrückführ-Kühler und/oder einem Verbrennungsluftkühler einen Niederschlag zu erzeugen, der schließlich zur Reinigung des Brennraums herangezogen wird.

Es wird auch ein Verfahren bevorzugt, dass sich dadurch auszeichnet, dass der gasförmige Stoff stromaufwärts der Kühleinrichtung verdichtet wird. Hierzu ist bevorzugt ein Kompressor vorgesehen. Alternativ oder zusätzlich ist es möglich, dass ein Turbolader zur Verdichtung des gasförmigen Stoffs verwendet wird. Der gasförmige Stoff wird bevorzugt verdichtet, bevor er der Kühleinrichtung zugeführt wird. Auf diese Weise ist es möglich, bei der Verdichtung entstehende Wärme mittels der Kühleinrichtung abzuführen und so insbesondere eine Füllung des mindestens einen Brennraums zu erhöhen.

Es wird auch ein Verfahren bevorzugt, dass sich dadurch auszeichnet, dass die Temperatur in der Kühleinrichtung einmalig unter den Taupunkt gesenkt wird. Dies spricht an, dass die Temperatur in der Kühleinrichtung bei einem normalen Betrieb der Brennkraftmaschine oberhalb des Taupunkts gehalten wird, was der zuvor beschriebenen, üblichen Vorgehensweise entspricht. Lediglich um die Brennkraftmaschine zu reinigen, wird die Temperatur in der Kühleinrichtung zu einem vorherbestimmten Zeitpunkt, nach einer vorherbestimmten Anzahl von Betriebsstunden, nach einer vorherbestimmten, insgesamt abgegebenen Leistung der Brennkraftmaschine oder nach einer vorherbestimmten zurückgelegten Fahrstrecke eines von der Brennkraftmaschine angetriebenen Kraftfahrzeugs, zur Reinigung des mindestens einen Brennraums einmalig unter den Taupunkt gesenkt. Insbesondere ist es möglich, dass das Verfahren bei oder unmittelbar nach einem Start der Brennkraftmaschine durchgeführt wird.

Alternativ ist es möglich, dass die Temperatur in der Kühleinrichtung periodisch unter den Taupunkt gesenkt wird. Insbesondere kann dies regelmäßig nach einem Neustart der Brennkraftmaschine, nach einer vorherbestimmten Zeit, nach einer vorherbestimmten Anzahl von Betriebssturiden, nach einem vorherbestimmten Intervall einer von der Brennkraftmaschine abgegebenen Leistung oder nach einer vorherbestimmten Fahrstrecke eines von der Brennkraftmaschine angetriebenen Kraftfahrzeugs durchgeführt werden.

Alternativ ist es möglich, dass die Temperatur in der Kühleinrichtung dauerhaft unter den Taupunkt gesenkt beziehungsweise dauerhaft auf einem Wert unterhalb des Taupunkts gehalten wird. Hierbei ergibt sich nicht nur eine kontinuierliche Reinigung des mindestens einen Brennraums, sondern es ergeben sich insbesondere auch die bereits beschriebenen Vorteile in Hinblick auf eine reduzierte oder sogar ganz vermiedene Neubildung von Ablagerungen.

Schließlich ist es möglich, dass die Temperatur in der Kühleinrichtung bedarfsabhängig unter den Taupunkt gesenkt wird. Dabei ist vorzugsweise vorgesehen, dass die Bildung von Ablagerungen mittelbar oder unmittelbar mit Hilfe einer geeigneten Einrichtung erfasst wird, wobei das Reinigungsverfahren durchgeführt, mithin die Temperatur unter den Taupunkt gesenkt wird, wenn die Ablagerungen ein vorherbestimmtes Maß überschreiten.

Es wird auch ein Verfahren bevorzugt, dass sich dadurch auszeichnet, dass mindestens eine Größe des Stoffs stromaufwärts oder stromabwärts der Kühleinrichtung gemessen wird. Dabei wird aus der mindestens einen Größe der Taupunkt des Stoffs bestimmt. Auf diese Weise ist es möglich, die Temperatur in der Kühleinrichtung zu jedem Zeitpunkt gezielt entweder oberhalb oder unterhalb des Taupunkts zu halten, je nachdem ob das Verfahren zur Brennraumreinigung durchgeführt oder nicht durchgeführt werden soll. Auch ist es auf diese Weise möglich, die Brennkraftmaschine unter verschiedenen äußeren Bedingungen, insbesondere in Gegenden oder zu Zeiten mit verschiedener Luftfeuchtigkeit, gezielt unter Durchführung des Verfahrens oder unter bewusster Vermeidung des Verfahrens zu betreiben.

In diesem Zusammenhang wird ein Verfahren bevorzugt, dass sich dadurch auszeichnet, dass die Größe, aus welcher der Taupunkt bestimmt wird, ausgewählt ist aus einer Gruppe bestehend aus einem Druck, einer Temperatur und einer relativen Feuchte des Stoffes. Besonders bevorzugt werden der Druck, die Temperatur und die relative Feuchte des Stoffes gemessen, wobei aus allen Messwerten gemeinsam der Taupunkt bestimmt wird. Es ist dann sehr sicher möglich, zu jedem Zeitpunkt und unter beliebigen Einsatzbedingungen gezielt die Temperatur in der Kühleinrichtung so zu wählen, dass das Verfahren zur Brennraumreinigung entweder durchgeführt oder bewusst vermieden wird.

Die Aufgabe wird auch gelöst, indem eine Brennkraftmaschine mit den Merkmalen des Anspruchs 9 geschaffen wird. Diese umfasst mindestens einen Brennraum und eine Kühleinrichtung zur Kühlung eines dem Brennraum zuführbaren Stoffs. Die Brennkraftmaschine zeichnet sich durch eine Steuerungseinrichtung aus, die ausgebildet ist zur Bestimmung eines Taupunkts des dem Brennraum zuzuführenden Stoffes, wobei die Steuereinrichtung so ausgebildet und mit der Kühleinrichtung wirkverbunden ist, dass durch sie eine Temperatur in der Kühleinrichtung unter den Taupunkt absenkbar ist. Insbesondere ist die Brennkraftmaschine bevorzugt zur Durchführung eines Verfahrens nach einer der zuvor beschriebenen Ausführuhgsformen ausgebildet.

Bevorzugt ist die Brennkraftmaschine als Hubkolbenmaschine ausgebildet, wobei das Verfahren während eines normalen Betriebs der Brennkraftmaschine durchgeführt wird, insbesondere auch unter Volllast durchführbar ist, wobei mit Hilfe der Kühleinrichtung entweder ein Gasgemisch aus Verbrennungsluft und einem Brennstoff, die Verbrennungsluft alleine, rückgeführtes Abgas alleine, oder ein Gemisch aus rückgeführtem Abgas und Verbrennungsluft unter den Taupunkt gekühlt wird, wenn das Verfahren durchgeführt wird.

Die Brennkraftmaschine umfasst vorzugsweise eine Zuleitung, durch welche der Stoff von der Kühleinrichtung zu dem mindestens einen Brennraum führbar ist. Die Steuereinrichtung ist vorzugsweise zur Ansteuerung der Kühleinrichtung ausgebildet und mit dieser so wirkverbunden, dass die Temperatur in der Kühleinrichtung durch die Steuereinrichtung Steuer- und/oder regelbar ist.

Vorzugsweise ist die Steuereinrichtung als Motorsteuergerät ausgebildet oder von einem Motorsteuergerät umfasst. In der Steuereinrichtung ist vorzugsweise ein Algorithmus implementiert, mit Hilfe dessen ein Taupunkt des dem Brennraum zuführbaren Stoffes bestimmbar und/oder eine Solltemperatur für die Kühleinrichtung berechenbar ist, die unter oder auch über dem Taupunkt des Stoffes liegen kann, je nachdem ob das Verfahren zur Brennraumreinigung durchgeführt werden soll oder nicht.

Es wird auch eine Brennkraftmaschine bevorzugt, die sich dadurch auszeichnet, dass sie mindestens ein Erfassungsmittel aufweist, das zur Erfassung mindestens einer Größe vorgesehen ist, aus welcher der Taupunkt des dem Brennraum zuzuführenden Stoffes bestimmbar ist. Das Erfassungsmittel ist mit der Steuereinrichtung zur Bestimmung des Taupunkts wirkverbunden.

Bei einem Ausführungsbeispiel ist das Erfassungsmittel als Drucksensor ausgebildet, der stromaufwärts oder stromabwärts der Kühleinrichtung angeordnet ist. Bei einem anderen Ausführungsbeispiel ist das Erfassungsmittel als Temperatursensor ausgebildet, der stromaufwärts oder stromabwärts der Kühleinrichtung angeordnet ist. Bei einem weiteren Ausführungsbeispiel ist das Erfassungsmittel als Feuchtesensor ausgebildet, der stromaufwärts oder stromabwärts der Kühleinrichtung angeordnet ist. Bei wieder einem anderen Ausführungsbeispiel sind bevorzugt ein Drucksensor, ein Temperatursensor und ein Feuchtesensor als Erfassungsmittel vorgesehen, die jeweils stromaufwärts oder stromabwärts der Kühleinrichtung angeordnet sein können.

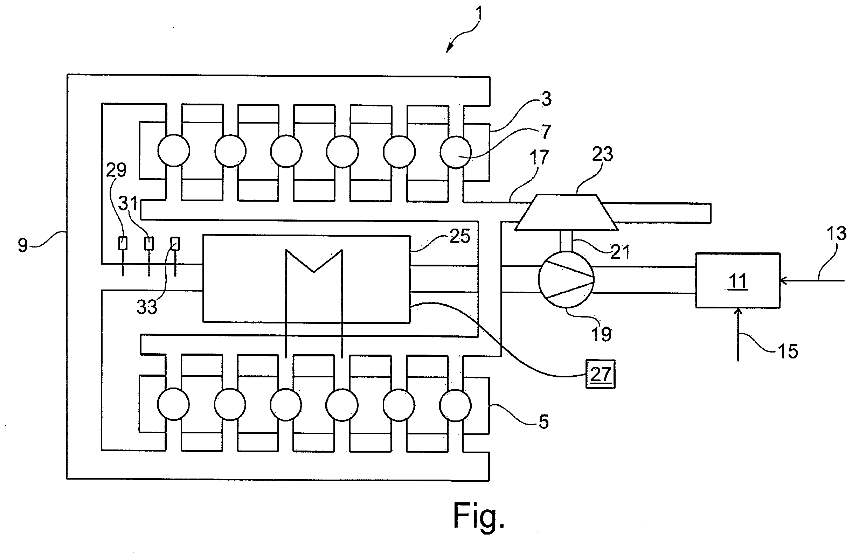

Die Erfindung wird im Folgenden anhand der Zeichnung näher erläutert. Dabei zeigt die einzige Figur eine schematische Darstellung einer Brennkraftmaschine, die zur Durchführung des Verfahrens eingerichtet ist.

Die Figur zeigt eine schematische Darstellung eines Ausführungsbeispiels einer Brennkraftmaschine 1. Diese ist hier als Zwölfzylinder-V-Motor mit einer ersten Zylinderbank 3 und einer zweiten Zylinderbank 5 ausgebildet, wobei jede der Zylinderbänke 3, 5 sechs Brennräume umfasst, von denen hier der besseren Übersichtlichkeit wegen nur einer mit dem Bezugszeichen 7 gekennzeichnet ist. Den Brennräumen 7 wird über eine Zuleitung 9 ein gasförmiger Stoff zugeführt. Dieser ist bei dem dargestellten Ausführungsbeispiel als Gemisch ausgebildet, welches in einem Gasmischer 11 aus Verbrennungsluft 13 und einem Brennstoff 15 bereitet wird.

In den Brennräumen 7 findet bekannterweise eine Verbrennungsreaktion statt, wobei Rückstände, insbesondere Abgas entsteht, welche über eine Ableitung 17 abgeführt werden.

Das Gasgemisch wird stromabwärts des Gasmischers 11 in einem Verdichter 19 verdichtet, der hier über eine Welle 21 von einer Turbine 23 angetrieben wird, die ihrerseits durch das in der Ableitung 17 strömende Abgas angetrieben wird. Bei dem dargestellten Ausführungsbeispiel der Brennkraftmaschine 1 ist also ein Turbolader vorgesehen, der den Verdichter 19, die Welle 21 und die Turbine 23 umfasst. Alternativ ist es möglich, das zur Verdichtung des Gasgemischs stromabwärts des Gasmischers 11 ein Kompressor vorgesehen ist, der beispielsweise von einer Kurbelwelle der Brennkraftmaschine oder von einem Hilfsmotor angetrieben wird.

Stromabwärts des Verdichters 19 ist eine Kühleinrichtung 25 angeordnet, die von dem Gasgemisch durchströmt wird, wobei dieses nach der Verdichtung gekühlt wird. Auf diese Weise ist es generell möglich, eine Füllung der Brennräume 7 zu erhöhen.

Bei dem dargestellten Ausführungsbeispiel wird die Kühleinrichtung 25 durch eine Steuerungseinrichtung 27 angesteuert, insbesondere wird eine Temperatur in der Kühleinrichtung 25 durch die Steuerungseinrichtung 27 gesteuert und/oder geregelt.

Bei dem dargestellten Ausführungsbeispiel sind stromabwärts der Kühleinrichtung 25 in der Zuleitung 9 drei Erfassungsmittel zur Erfassung einer Größe des Gasgemischs, aus der ein Taupunkt desselben bestimmt werden kann, vorgesehen. Dies sind hier ein Drucksensor 29, ein Temperatursensor 31 und ein Feuchtesensor 33. Vorzugsweise sind der Drucksensor 29, der Temperatursensor 31 und der Feuchtesensor 33 mit der Steuerungseinrichtung 27 wirkverbunden, so dass diese auf der Grundlage der mit Hilfe der Sensoren 29, 31, 33 gemessenen Werte einen Taupunkt des Gasgemischs bestimmen und die Temperatur in der Kühleinrichtung 25 so steuern und/oder regeln kann, dass diese entweder unter oder über dem Taupunkt liegt. Die entsprechenden Wirkverbindungen sind hier der besseren Übersichtlichkeit wegen nicht explizit dargestellt.

Sollen die Brennräume gereinigt werden, wird die Temperatur in der Kühleinrichtung 25 durch die Steuerungseinrichtung 27 gezielt unter den Taupunkt des Gasgemischs gesenkt, so dass in der Kühleinrichtung 25 und/oder stromabwärts von dieser in der Zuleitung 9 ein Niederschlag von Wasser gebildet wird. Dieser wird über die Zuleitung 9 gemeinsam mit dem Gasgemisch in die Brennräume 7 eingeleitet, wo der Niederschlag durch die Druck- und Temperaturerhöhung aufgrund der in den Brennräumen durchgeführten Verbrennungsreaktion schlagartig verdampft. Dadurch platzen Ablagerungen an Wandungen der Brennräume 7 ab. Diese können gemeinsam mit dem Abgas über die Ableitung 17 abgeführt werden. Sollen die Brennräume 7 nicht gereinigt werden, wird die Temperatur in der Kühleinrichtung 25 durch die Steuerungseinrichtung 27 auf einen Wert oberhalb des Taupunkts des Gasgemischs gesteuert und/oder geregelt.

Statt der Kühleinrichtung 25, die hier als Gemischkühler ausgebildet ist, ist es bei einem anderen Ausführungsbeispiel der Brennkraftmaschine 1 möglich, zur Durchführung des Verfahrens einen Verbrennungsluftkühler heranzuziehen, wobei als gasförmiger Stoff Verbrennungsluft verwendet wird. Bei einem anderen Ausführungsbeispiel der Brennkraftmaschine 1 ist es möglich, einen Abgasrückführ-Kühler oder einen Verbrennungsluftkühler zu verwenden, um rückgeführtes Abgas der Brennkraftmaschine separat von oder gemeinsam mit der Verbrennungsluft zu kühlen.
Ist bei einem Ausführungsbeispiel der Brennkraftmaschine kein Erfassungsmittel zur Erfassung mindestens einer Größe vorgesehen, um den Taupunkt des gasförmigen Stoffs zu bestimmen, ist es möglich, die Steuerungseinrichtung 27 zur Durchführung des Verfahrens auf einen typischen Wert der relativen Feuchte des den Brennräumen 7 zugeführten gasförmigen Stoffes zu programmieren, der dann von den Einsatzbedingungen der Brennkraftmaschine 1 abhängt. Die Steuerungseinrichtung 27 wird dann beispielsweise für einen Einsatz in tropischen Gegenden mit hoher Luftfeuchtigkeit anders programmiert als für einen Einsatz in Gebieten, in denen eine geringere Luftfeuchtigkeit vorherrscht. Auch diese Möglichkeit ist von der Formulierung umfasst, dass die Steuerungseinrichtung zur Bestimmung des Taupunktes ausgebildet ist, wobei in diesem Fall der Taupunkt über die Programmierung beziehungsweise durch Auslesen eines Speichers bestimmt wird.

Mit Hilfe der Steuerungseinrichtung 27 ist es möglich, das Verfahren einmalig, periodisch, dauerhaft und/oder bedarfsabhängig durchzuführen, mithin die Temperatur in der Kühleinrichtung 25 einmalig, periodisch, dauerhaft und/oder bedarfsabhängig unter den Taupunkt des den Brennräumen 7 zugeführten gasförmigen Stoffes zu senken.

Es zeigt sich, dass das Verfahren lediglich auf ohnehin vorgesehene Komponenten der Brennkraftmaschine 1 zurückgreift. Es bedarf insbesondere keiner zusätzlichen Einspritzeinrichtung für Wasser und auch keines speziell mitgeführten Wasservorrats, weil das zum Reinigen der Brennräume herangeführte Wasser aus der Feuchtigkeit des zugeführten gasförmigen Stoffes gewonnen wird. Das Verfahren ist zugleich sehr effizient und kann während des Betriebs der Brennkraftmaschine 1 auch unter Volllast durchgeführt werden. Damit erübrigt sich eine aufwändige und kostenintensive Reinigung unter Zerlegung der Brennkraftmaschine 1 sowie eine mechanische Entfernung von Ablagerungen.

Insgesamt zeigt sich, dass das Verfahren und die Brennkraftmaschine eine besonders kostengünstige, zeit- und aufwandsparende Möglichkeit bereitstellen, die Brennräume 7 von Ablagerungen zu reinigen und so letztlich auch die Lebensdauer und Maximalleistung der Brennkraftmaschine 1 zu erhöhen.

## Patentansprüche

1. Verfahren zum Reinigen eines Brennraums (7) einer Brennkraftmaschine (1) mit folgenden Schritten: Einleiten eines gasförmigen Stoffes in eine Kühleinrichtung (25), wobei der gasförmige Stoff zumindest stromaufwärts der Kühleinrichtung (25) eine relative Feuchte von mehr als 0% aufweist, Ansteuern der Kühleinrichtung (25) durch eine Steuereinrichtung (27), wodurch eine Temperatur in der Kühleinrichtung (25) durch die Steuereinrichtung (27) gesteuert und/oder geregelt wird, Kühlen des Stoffes in der Kühleinrichtung (25) unter einen Taupunkt, so dass ein Niederschlag von Wasser gebildet wird, Einleiten des den Niederschlag umfassenden Stoffs in einen Brennraum (7) der Brennkraftmaschine (1), Durchführen einer Verbrennungsreaktion in dem Brennraum (7), und Ausleiten von Rückständen aus dem Brennraum (7).

2. Verfahren nach Anspruch 1, **dadurch gekennzeichnet, dass** als gasförmiger Stoff ein Gasgemisch aus Verbrennungsluft und einem Brennstoff verwendet wird, wobei als Kühleinrichtung (25) vorzugsweise ein Gemischkühler verwendet wird.

3. Verfahren nach einem der vorhergehenden Ansprüche, **dadurch gekennzeichnet, dass** als gasförmiger Stoff Verbrennungsluft verwendet wird, wobei als Kühleinrichtung (25) vorzugsweise ein Verbrennungsluftkühler verwendet wird.

4. Verfahren nach einem der vorhergehenden Ansprüche, **dadurch gekennzeichnet, dass** als gasförmiger Stoff rückgeführtes Abgas der Brennkraftmaschine (1) verwendet wird, wobei als Kühleinrichtung (25) vorzugsweise ein Abgasrückführ-Kühler oder ein Verbrennungsluftkühler verwendet wird.

5. Verfahren nach einem der vorhergehenden Ansprüche, **dadurch gekennzeichnet, dass** der gasförmige Stoff stromaufwärts der Kühleinrichtung (25) verdichtet wird, vorzugsweise durch einen Kompressor oder einen Turbolader.

6. Verfahren nach einem der vorhergehenden Ansprüche, **dadurch gekennzeichnet, dass** die Temperatur in der Kühleinrichtung (25) einmalig vorzugsweise bei einem Start der Brennkraftmaschine (1), periodisch, dauerhaft oder bedarfsabhängig unter den Taupunkt gesenkt wird.

7. Verfahren nach einem der vorhergehenden Ansprüche, **dadurch gekennzeichnet, dass** mindestens eine Größe des Stoffs stromaufwärts oder stromabwärts der Kühleinrichtung (25) gemessen wird, wobei aus der mindestens einen Größe der Taupunkt bestimmt wird.

8. Verfahren nach Anspruch 7, **dadurch gekennzeichnet, dass** die Größe ausgewählt ist aus einer Gruppe bestehend aus einem Druck, einer Temperatur und einer relativen Feuchte des Stoffes.

9. Brennkraftmaschine (1) mit mindestens einem Brennraum (7) und einer Kühleinrichtung (25) zur Kühlung eines dem Brennraum (7) zuführbaren Stoffes, **gekennzeichnet durch** eine Steuerungseinrichtung (27), die ausgebildet ist zur Bestimmung eines Taupunktes des dem Brennraum (7) zuzuführenden Stoffes, wobei die Steuereinrichtung (27) so ausgebildet und mit der Kühleinrichtung (25) wirkverbunden ist, dass durch sie eine Temperatur in der Kühleinrichtung (25) unter den Taupunkt absenkbar ist.

10. Brennkraftmaschine (1) nach Anspruch 9, **dadurch gekennzeichnet, dass** die Brennkraftmaschine (1) mindestens ein Erfassungsmittel aufweist zur Erfassung mindestens einer Größe, aus welcher der Taupunkt des dem Brennraum (7) zuzuführenden Stoffes bestimmbar ist, wobei das Erfassungsmittel mit der Steuereinrichtung (27) zur Bestimmung des Taupunkts wirkverbunden ist.

## Claims

1. Method for cleaning a combustion chamber (7) of an internal combustion engine (1), having the following steps: introducing a gaseous substance into a cooling device (25), wherein the gaseous substance has, at least upstream of the cooling device (25), a relative humidity of greater than 0%,controlling the cooling device (25) by way of a control device (27), as a result of which a temperature in the cooling device (25) is controlled and/or regulated by way of the control device(27), cooling the substance in the cooling device (25) to below a dewpoint, such that a water precipitate is formed, introducing the substance comprising the precipitate into a combustion chamber (7) of the internal combustion engine (1), performing a combustion reaction in the combustion chamber (7), and discharging residues from the combustion chamber (7).

2. Method according to Claim 1, **characterized in that** a gas mixture composed of combustion air and a fuel is used as gaseous substance, wherein a mixture cooler is preferably used as cooling device (25).

3. Method according to one of the preceding claims, **characterized in that** combustion air is used as gaseous substance, wherein a combustion air cooler is preferably used as cooling device (25).

4. Method according to one of the preceding claims, **characterized in that** recirculated exhaust gas of the internal combustion engine (1) is used as gaseous substance, wherein an exhaust-gas recirculation cooler or a combustion air cooler is used as cooling device (25).

5. Method according to one of the preceding claims, **characterized in that** the gaseous substance is compressed upstream of the cooling device (25), preferably by way of a compressor or a turbocharger.

6. Method according to one of the preceding claims, **characterized in that** the temperature in the cooling device (25) is lowered to below the dewpoint once, preferably upon starting of the internal combustion engine (1), periodically, permanently or in accordance with demand.

7. Method according to one of the preceding claims, **characterized in that** at least one variable of the substance is measured upstream or downstream of the cooling device (25), wherein the dewpoint is determined from the at least one variable.

8. Method according to Claim 7, **characterized in that** the variable is selected from a group comprising a pressure, a temperature and a relative humidity of the substance.

9. Internal combustion engine (1) having at least one combustion chamber (7) and having a cooling device (25) for cooling a substance that can be supplied to the combustion chamber (7), **characterized by** a control device (27) which is designed for determining a dewpoint of the substance for supply to the combustion chamber (7), wherein the control device (27) is designed, and operatively connected to the cooling device (25), such that a temperature in the cooling device (25) can be lowered to below the dewpoint by way of said control device.

10. Internal combustion engine (1) according to Claim 9, **characterized in that** the internal combustion engine (1) has at least one detection means for detecting at least one variable from which the dewpoint of the substance for supply to the combustion chamber (7) can be determined, wherein the detection means is operatively connected to the control device (27) for determining the dewpoint.

## Revendications

1. Procédé de nettoyage d'une chambre de combustion (7) d'un moteur à combustion interne (1), le procédé comprenant les étapes suivantes : introduction d'une substance gazeuse dans un dispositif de refroidissement (25), la substance gazeuse présentant, au moins en amont du dispositif de refroidissement (25), une humidité relative supérieure à 0%, commande du dispositif de refroidissement (25) au moyen d'un dispositif de commande (27), de sorte qu'une température dans le dispositif de refroidissement (25) soit commandée et/ou régulée au moyen du dispositif de commande (27), refroidissement de la substance dans le dispositif de refroidissement (25) en dessous d'un point de rosée, de sorte qu'une condensation d'eau soit formée, introduction de la substance comportant la condensation dans une chambre de combustion (7) du moteur à combustion interne (1), mise en oeuvre d'une réaction de combustion dans la chambre de combustion (7), et évacuation de résidus hors de la chambre de combustion (7).

2. Procédé selon la revendication 1, **caractérisé en ce qu'**en tant que substance gazeuse on utilise un mélange gazeux constitué d'air de combustion et d'un carburant, un refroidisseur de mélange étant de préférence utilisé en tant que dispositif de refroidissement (25).

3. Procédé selon l'une des revendications précédentes, **caractérisé en ce qu'**en tant que substance gazeuse on utilise de l'air de combustion, un refroidisseur d'air de combustion étant de préférence utilisé en tant que dispositif de refroidissement (25).

4. Procédé selon l'une des revendications précédentes, **caractérisé en ce qu'**en tant que substance gazeuse on utilise des gaz d'échappement recirculés du moteur à combustion interne (1), un refroidisseur de recirculation de gaz d'échappement ou un refroidisseur d'air de combustion étant de préférence utilisé en tant que dispositif de refroidissement (25).

5. Procédé selon l'une des revendications précédentes, **caractérisé en ce que** la substance gazeuse est comprimée en amont du dispositif de refroidissement (25), de préférence au moyen d'un compresseur ou d'un turbocompresseur.

6. Procédé selon l'une des revendications précédentes, **caractérisé en ce que** la température dans le dispositif de refroidissement (25) est abaissée en dessous du point de rosée une fois, de préférence lors d'un démarrage du moteur à combustion interne (1), périodiquement, de manière permanente ou selon les besoins.

7. Procédé selon l'une des revendications précédentes, **caractérisé en ce qu'**au moins une grandeur de la substance est mesurée en amont ou en aval du dispositif de refroidissement (25), le point de rosée étant déterminé à partir de ladite au moins une grandeur.

8. Procédé selon la revendication 7, **caractérisé en ce que** la grandeur est sélectionnée à partir d'un groupe constitué d'une pression, d'une température et d'une humidité relative de la substance.

9. Moteur à combustion interne (1) comprenant au moins une chambre de combustion (7) et un dispositif de refroidissement (25) pour le refroidissement d'une substance pouvant être acheminée jusqu'à la chambre de combustion (7), **caractérisé par** un dispositif de commande (27) qui est conçu pour déterminer un point de rosée de la substance à acheminer jusqu'à la chambre de combustion (7), le dispositif de commande (27) étant réalisé et relié fonctionnellement au dispositif de refroidissement (25) de telle sorte que, grâce à lui, une température dans le dispositif de refroidissement (25) peut être abaissée en dessous du point de rosée.

10. Moteur à combustion interne (1) selon la revendication 9, **caractérisé en ce que** le moteur à combustion interne (1) comprend au moins un moyen de détection pour la détection d'au moins une grandeur à partir de laquelle le point de rosée de la substance à acheminer jusqu'à la chambre de combustion (7) peut être déterminé, le moyen de détection étant relié fonctionnellement au dispositif de commande (27) pour la détermination du point de rosée.
